# EUROPEAN PATENT APPLICATION

(11) **EP 4 752 356 A1**
(43) Date of publication of application: **03.06.2026**
(21) Application number: 24216963.9
(22) Date of filing: 02.12.2024
(51) Int. Cl.: F03D 1/06, F03D 13/40

(54) **PRODUCTION LINES AND POST MOULDING MANUFACTURING METHODS FOR WIND TURBINE BLADES**

(71) Applicant: LM Wind Power A/S, 6000 Kolding (DK)
(72) Inventor: MOSEGAARD, Ivan Kaab, 6640 Lunderskov (DK); KADAM, Radhika, 6640 Lunderskov (DK)
(74) Representative: Bardehle Pagenberg S.L.

(57) **Abstract**

The present disclosure relates to a production line (5) for manufacturing a wind turbine blade (11). The production line (5) comprises a first workstation (61) configured for carrying out a post moulding manufacturing step on an assembled blade (10) when the assembled blade (10) passes along the first workstation (61) while being conveyed in a first direction (D1) that is substantially aligned with a longitudinal axis of the assembled blade (10). The first workstation (61) extends over a length in a direction that is substantially parallel to the first direction (D1). The length of the first workstation (61) is less than a longitudinal length of the assembled blade (10). The production line (5) also comprises a conveyor system (70) configured for conveying the assembled blade (10) in the first direction (D1). The present disclosure also relates to a method for carrying out a post moulding manufacturing step on an assembled wind turbine blade (10).

## Description

### FIELD

The present disclosure relates to wind turbine blades and methods for manufacturing wind turbine blades. The present disclosure particularly relates to production lines and methods for carrying out post moulding manufacturing steps. The present disclosure further relates to kits comprising blade supports which might be used in such methods and production lines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

It is known to manufacture wind turbine blades where each of the wind turbine blades are moulded and assembled at the same workstation. The wind turbine blade may then be moved to another workstation, typically a finishing workstation, where post moulding manufacturing steps are carried out. These post moulding manufacturing steps include, among others, cutting, trimming, painting, or mounting of final fittings on the wind turbine blade.

The wind turbine blades are often made of fiber-reinforced polymer and are usually manufactured as shell parts in moulds, where the top side and the bottom side of the blade profile (typically the pressure side and suction side, respectively) are manufactured separately by arranging glass fiber mats in each of the two mould parts and injecting a liquid resin, which subsequently is cured. Afterwards, the two halves of the blade are glued together, often by means of internal flange parts. Glue is applied to the inner face of the lower blade half before the upper blade half is lowered thereon or *vice versa.* Additionally, one or two reinforcing profiles (beams) are often attached to the inside of the lower blade half prior to gluing to the upper blade half. A crane or hoisting assembly may be used to lift one of the mould parts about a hinge line for closure and opening of the moulds.

Once the two halves are glued together, post moulding manufacturing steps are carried out on the resulting assembled wind turbine blade. To this end, the assembled wind turbine blade is provided at a stationary finishing workstation. All finishing processes and operations are carried out in the finishing workstation so that tools and operators are moved to such finishing workstation. In order to reach all the areas of the assembled wind turbine blade requiring a post moulding manufacturing step, equipment, tools and operators need to move around the assembled wind turbine blade.

Due to the increasing size of the wind turbine blades, and to the typical pre-bending of the blades, access to all such areas can be challenging. Indeed, wind turbine blades are typically manufactured with a curvature. In particular, it is known to provide a curvature so that the wind turbine blades, when mounted on a hub of a wind turbine rotor, do not extend only outwardly from the hub but also forwardly, i.e. in a direction away from the wind turbine tower. Such a curvature is typically provided in at least an outer third of the length of the wind turbine blade. The pre-bending is designed such that, when taking into account the bending of the blade due to the wind pressure during wind turbine operation, a clearance between the rotating blade and the wind turbine tower is maintained. The curvature results in a non-perfectly horizontal arrangement of the wind turbine blade during manufacturing, which results in varying working heights at different locations along the blade while carrying out post moulding manufacturing steps. Such a varying height needs to be accounted for during manufacturing operations, thus leading to specifically designed equipment and/or to ergonomic limitations for the operators conducting the manufacturing steps.

A plurality of wind turbine blades is typically finished in a simultaneous manner, i.e. in parallel. Accordingly, different workstations, each of them intended to conduct all finishing operations in a respective wind turbine blade, are provided in the assembly plant. Consequently, post moulding operations take up a significant footprint. Moreover, tools, equipment and personnel need to be transferred from blade to blade, i.e. from finishing workstation to finishing workstation, thus reducing efficiency and safety of the overall manufacturing process.

However, as the demand for wind turbines is rapidly increasing, it is found increasingly difficult to scale the conventional manufacturing method to accommodate the demand for several reasons. Firstly, the conventional manufacturing method requires that all the materials required for manufacturing a wind turbine blade, e.g. resin and fiber reinforcement material, be transported to every workstation. This is logistically demanding. Secondly, every workstation has to be equipped with tools that are necessary for each manufacturing step in the process, which results in a significant overhead. Additionally, the conventional manufacturing method requires a mould in every single workstation, which is expensive, since production and maintenance of moulds are time consuming. Furthermore, the conventional manufacturing method occupies a lot of space, and since the workers at each workstation have to perform a variety of manufacturing steps, there is a risk that the quality of the manufactured wind turbine blades may suffer.

EP2403708 proposes an alternative manufacturing method and an alternative manufacturing line involving "moving moulds". In this prior art document, a manufacturing line is disclosed, wherein wind turbine blades are formed in a number of moulds, each of the moulds comprising at least a first mould part comprising a first mould cavity. The manufacturing line further comprises a number of separate workstations, where separate manufacturing steps are carried out. The moulds are moved using conveying means from one workstation to another workstation so that the different manufacturing steps are carried out. Hereby, a method is provided whereby wind turbine blades can be manufactured using fewer resources e.g. moulds and tools, or alternatively improving the throughput as the method increases the number of manufactured wind turbine blades per time unit compared to conventionally project oriented manufacturing methods.

Since the mould sets are movable in relation to the workstations, the method furthermore provides that each workstation can be equipped with specialized and advanced equipment that is dedicated to the manufacturing step carried out at each workstation. Additionally, each workstation can be manned with specialized workers that are skilled and trained in the manufacturing step carried out at that particular workstation. However, some of the workstations can also be automated, e.g. by using robots, such that fewer workers are needed. Automation is also expected to additionally improve the quality of the manufactured wind turbine blades.

The conveying means used to move the moulds may comprise at least four wheels and/or rollers mounted on each of the number of moulds, whereby the moulds can easily be moved. The conveying means may also comprise rails or tracks on which the moulds can be transported.

According to this example of the prior art, the method further comprises a plurality of finishing workstations. Each of the finishing workstations is configured for conducting a certain manufacturing step on the already assembled wind turbine blade. Hence, the assembled wind turbine blade, when demoulded from the corresponding mould, is transported to a first finishing workstation. A first post moulding manufacturing step, e.g. cutting and trimming, can then be carried out while the assembled wind turbine is arranged in the first finishing workstation. Upon completion of such first post moulding manufacturing step, the assembled wind turbine blade can be transferred to a subsequent finishing workstation. Once the assembled wind turbine blade lies stationary in the subsequent finishing workstation, a subsequent post moulding manufacturing step, e.g. painting, can be carried out.

Although the use of a plurality of finishing workstations according to EP2403708 exhibits some advantages over more traditional manufacturing methods, a number of drawbacks and limitations still remain. In particular, the required footprint is still significantly large as a plurality of workstations, each of them spanning the whole length of the wind turbine blades, are needed. Furthermore, access to all the needed areas of the assembled wind turbine blade remains difficult, especially in view of the increasing length of wind turbine blades and the pre-bending of the same, which results in working operations being carried out at different heights.

Consequently, further improvements are still welcome, especially in terms of improving the efficiency, quality and safety of post moulding manufacturing steps for wind turbine blades. The present disclosure provides examples of production lines and methods for blade manufacturing that at least partially reduce the above mentioned limitations.

### SUMMARY

In an aspect of the present disclosure, a production line for manufacturing a wind turbine blade is provided. The production line comprises a first workstation configured for carrying out a post moulding manufacturing step on an assembled wind turbine blade when the assembled wind turbine blade passes along the first workstation while being conveyed in a first direction that is substantially aligned with a longitudinal axis of the assembled wind turbine blade. The first workstation extends over a length in a direction that is substantially parallel to the first direction. The length of the first workstation is less than a longitudinal length of the assembled wind turbine blade. The production line also comprises a conveyor system configured for conveying the assembled wind turbine blade in the first direction such that the assembled wind turbine blade passes along the first workstation.

According to this aspect, a more efficient production line for the manufacturing of wind turbine blades is provided. By moving the assembled wind turbine blade along the first workstation, a post moulding manufacturing step is carried out in a continuous manner and the throughput of the production line can be optimized by consecutively conveying assembled wind turbine blades, i.e. demoulded wind turbine blades, along the first workstation. Moreover, the movement of tools, equipment and/or operators is reduced, thus making the whole process lean and efficient. Furthermore, the footprint of the workstation is also reduced, as the workstation is not required to facilitate access to the whole extent of the assembled wind turbine blade. Consequently, higher blade output per unit area of footprint is achieved.

Ergonomics and safety of the manufacturing operations are also enhanced as operators carrying out a post moulding manufacturing step do not need to move all around the wind turbine blade. On the contrary, by moving the assembled wind turbine blade, and by passing the blade along the workstation, the operators can remain in a substantially fixed position during the process. As a result, not only improved safety, but also enhanced efficiency and quality of the manufactured wind turbine blades, are achieved. Hence, improved control over the manufacturing process can be obtained. In example, the post moulding manufacturing step may require physical access to the assembled wind turbine blade, i.e. either to an external surface or an interior of the assembled wind turbine blade.

The first workstation may be equipped with the necessary tools to carry out the corresponding post moulding manufacturing step. In particular, in an example, the first workstation may be configured to carry out a specific post moulding manufacturing step. This way, a specialized workstation, with specialized operators, can be provided. A more cost-effective and reliable manufacturing process may be achieved in this manner. In some cases, machines, robots, and/or other automatic equipment may be provided in the workstation whereas, in some other cases, operations may be carried out manually. In both cases, the provision of a dedicated workstation may result in better quality and throughput.

In another aspect of the disclosure, a method for carrying out a post moulding manufacturing step on an assembled wind turbine blade is provided. The assembled wind turbine blade comprises an upwind half shell and a downwind half shell joined at a leading edge and at a trailing edge. The method comprises supporting the assembled wind turbine blade and conveying the assembled wind turbine blade in a first direction such that the assembled wind turbine blade passes along a first workstation. The first direction is substantially aligned with a longitudinal axis of the assembled wind turbine blade. The first workstation is configured for carrying out a post moulding manufacturing step on the assembled wind turbine blade. The first workstation extends over a length in a direction that is substantially parallel to the first direction. The length of the first workstation is less than a longitudinal length of the assembled wind turbine blade. The method further comprises conducting the post moulding manufacturing step on the assembled wind turbine blade while the assembled wind turbine blade passes along the first workstation.

According to this aspect of the disclosure, an improved method for the manufacture of wind turbine blades is provided. By carrying out a manufacturing step while the assembled wind turbine is moving, a more optimum use of both equipment and personnel is achieved. Furthermore, as already mentioned with reference to the first aspect of the disclosure, a safer operation may be obtained while improving the quality of the manufactured blades. Moreover, as shown in more detail below with reference to different examples, a highly flexible and versatile process is also obtained, which can increase the throughput of the production line.

In yet a further aspect, a kit comprising a wagon and one or more blade fixtures for supporting a section of an assembled wind turbine blade is provided. The blade fixtures are selectively connectable to the wagon. The kit comprises a plurality of blade fixtures that are connectable to the wagon and exhibiting different sizes such that a vertical position of the supported assembled wind turbine blade section with respect to a ground level can be modified by selecting different blade fixtures.

As used throughout the present disclosure, a "production line" may be regarded as one or more workstations, generally arranged in the same geographical location i.e. at a manufacturing site such as a factory.

Throughout this disclosure, an assembled wind turbine blade is understood as a wind turbine blade after the demoulding step. As mentioned, wind turbine blades are usually manufactured in moulds. In some cases, wind turbine blades are manufactured as two shell parts or halves, each of them being moulded in a corresponding mould. Subsequently, the two halves are glued together. After attachment or gluing of the two halves, these are demoulded, thus giving place to a so-called assembled wind turbine blade. In other examples, the wind turbine blade can be moulded in a single step. In such cases, a demoulding step is also carried out and the assembled wind turbine blade corresponds also to the state of the wind turbine blade after such demoulding. For further clarification, in order to finalize the manufacturing of a wind turbine blade, some post moulding manufacturing steps, such as, among others, cutting, trimming, leading edge reinforcing, or painting, are needed to obtain a fully finalized and functional wind turbine blade.

Furthermore, throughout this disclosure, a longitudinal axis of the blade (or of the assembled wind turbine blade) is understood as the axis defining the main longitudinal direction of the blade. When in operation, such direction is substantially parallel to the rotor plane of the wind turbine. It is worth noting that, in some cases, wind turbine blades may be manufactured with a certain curvature or pre-bending as mentioned before. The curvature or pre-bending may be typically applied in an outer or tip region of the blade and it may typically span for about one third of the length of the blade. In such pre-bent wind turbine blades, the longitudinal axis of the blade is to be understood as the axis corresponding to the longitudinal direction of the blade in the non-curved portion, i.e. in the portion ranging from the root end to, e.g. half of the length of the blade. In other words, in blades that have pre-bending, such curvature or pre-bending represents a deviation from the longitudinal axis.

### BRIEF DESCRIPTION OF THE DRAWINGS

Non-limiting examples of the present disclosure will be described in the following, with reference to the drawings, in which
Figure 1 illustrates a perspective view of an example of a wind turbine;
Figure 2A illustrates a perspective view of an example of a wind turbine blade;
Figure 2B schematically illustrates an internal structure of a wind turbine blade;
Figure 3A-3C schematically illustrate a perspective view of a production line according to an example at three different sequential moments;
Figures 4A-4B schematically illustrate the horizontal arrangement of an assembled wind turbine blade without (Fig. 4A) or with (Fig. 4B) a straightening support according to an example;
Figures 5A-5B schematically illustrate a perspective view of blade supports for supporting a root portion (Fig. 5A) and a tip portion (Fig. 5B) of an assembled wind turbine blade according to an example;
Figures 6A-6B schematically illustrate a perspective view of blade root portion mounted on a blade support (Fig. 6A), and of a blade tip portion mounted on two blade supports (Fig. 6B) according to an example;
Figure 7 schematically illustrates two configurations of an example of a blade support configured for supporting a blade root portion of an assembled wind turbine blade;
Figures 8A-8E schematically illustrate a production line, including a conveyor system for conveying an assembled wind turbine blade, according to an example;
Figure 9 schematically illustrates an example of a production line for manufacturing a wind turbine blade including a moving root platform and a moving tip platform;
Figure 10 schematically illustrates a top view of a production line showing the transfer of the assembled wind turbine blade in and out of the production line according to an example;
Figure 11 schematically illustrates a perspective view of a blade support for a blade root portion of an assembled wind turbine blade according to an example;
Figure 12 schematically illustrate a sequence to arrange a blade support like the one depicted in Figure 11 into a production line according to an example;
Figure 13 schematically illustrates a perspective view of a portion of an assembled wind turbine blade, supported by a blade support, and arranged on a production line according to an example;
Figure 14 schematically illustrates a perspective view of a detail of an example of a mechanism configured for aligning a blade support with a conveyor system in a production line;
Figures 15A-15B schematically illustrate a perspective view of an example of a device configured for engaging a blade support with a chain of a conveyor system in a production line;
Figure 16 schematically illustrates a perspective view of an example of a production line for manufacturing a wind turbine blade;
Figure 17 schematically illustrates a perspective view of a moving root platform according to an example;
Figure 18 schematically illustrates an example of a production line including a plurality of workstations to carry out different post moulding manufacturing steps;
Figure 19 shows a flowchart of a method for carrying out a post moulding manufacturing step on an assembled wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

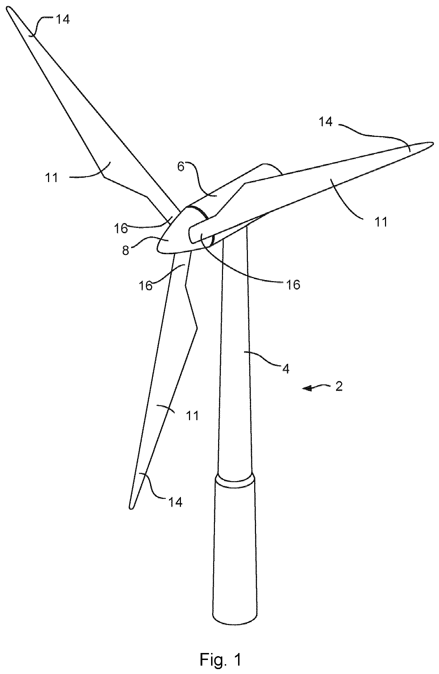

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 11 extending radially from the hub 8, each having a blade root portion 16 nearest the hub and a blade tip portion 14 furthest from the hub 8.

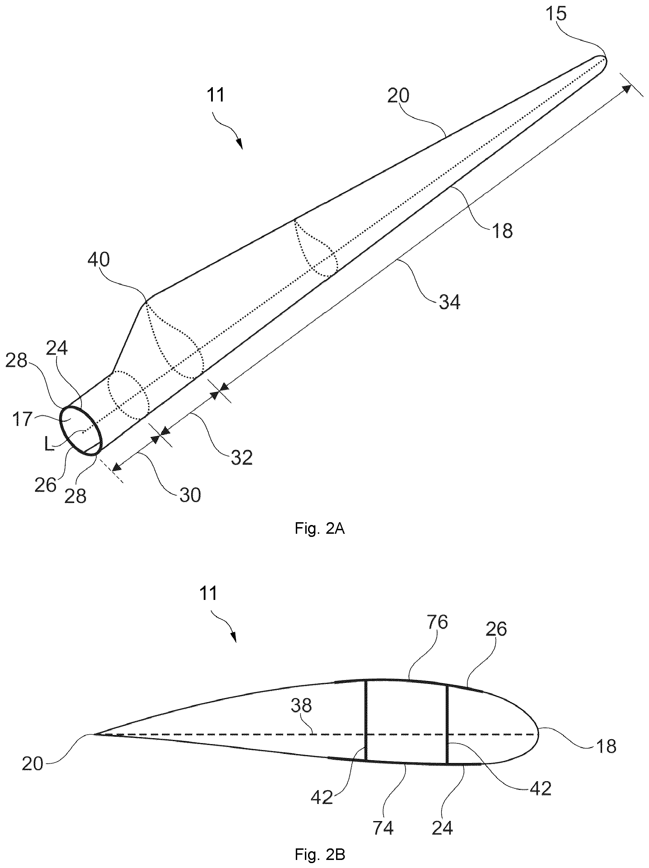

Fig. 2A shows a schematic view of an example of a wind turbine blade 11. The wind turbine blade 11 has the shape of a conventional wind turbine blade with a blade root end 17 and a blade tip end 15 and comprises a root region 30 closest to the hub, a profiled or an airfoil region 34 furthest away from the hub and a transition region 32 between the root region 30 and the airfoil region 34. The blade 11 comprises a leading edge 18 facing the direction of rotation of the blade 11, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 11 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 11. The width of the chord decreases with increasing distance r from the hub.

A shoulder 40 of the blade 11 is defined as the position, where the blade 11 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 11 comprises a blade shell comprising two blade shell parts or half shells, a first blade shell part 24 and a second blade shell part 26, typically made of fiber-reinforced polymer. The wind turbine blade 11 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 11. Typically, the root ends of the blade shell parts 24, 26 has a semi-circular or semi-oval outer cross-sectional shape.

Fig. 2B is a schematic diagram illustrating a cross sectional view of an example of a wind turbine blade 11, e.g. a cross-sectional view of the airfoil region of the wind turbine blade 11. The wind turbine blade 11 comprises a leading edge 18, a trailing edge 20, a pressure side 24, a suction side 26 a first spar cap 74, and a second spar cap 76. The wind turbine blade 11 comprises a chord line 38 between the leading edge 18 and the trailing edge 20. The wind turbine blade 11 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

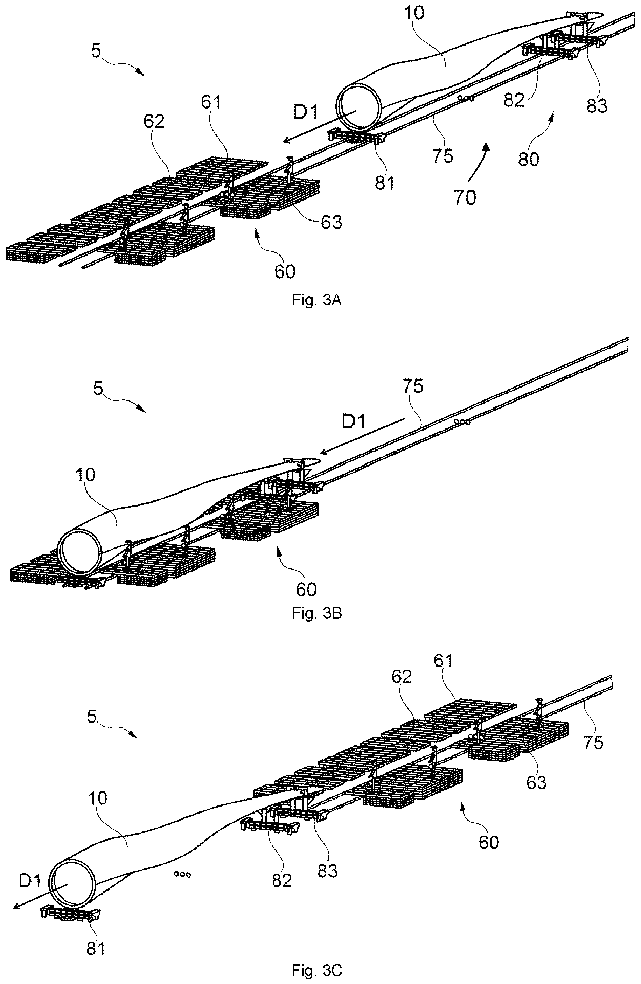

Figures 3A-3C schematically illustrate a production line 5 according to an example at three different moments. The production line 5 comprises a first workstation 61, which is configured for carrying out a post moulding manufacturing step on an assembled wind turbine blade 10. As previously mentioned, an assembled wind turbine blade, designated with a numeral 10, is understood as an almost finished wind turbine blade, i.e. a wind turbine blade that is being manufactured and for which demoulding has already taken place. Some post moulding, or finishing, manufacturing steps, such as cutting, trimming, painting, installation of aerodynamic devices, or installation of a leading edge protection, are carried out to transform such an assembled wind turbine blade 10, into a finished and fully functional wind turbine blade, designated with a numeral 11, as shown in Figures 1, 2A or 2B. In an example, the post moulding manufacturing steps may require physical access to an interior and/or an external surface of the assembled wind turbine blade 10.

The first workstation 61 is configured for carrying out a post moulding manufacturing step on the assembled wind turbine blade 10 while the assembled wind turbine blade 10 passes along the first workstation 61. The first workstation 61 extends over a length in a first direction D1, which is substantially parallel to a longitudinal axis of the assembled wind turbine blade 10. The length of the first workstation 61 is less than a longitudinal length of the assembled wind turbine blade 10. The production line 5 also comprises a conveyor system 70 configured for conveying the assembled wind turbine blade 10 in the first direction D1, such that the assembled wind turbine blade 10 passes along the first workstation 61.

Figure 3A corresponds to an initial situation in which the assembled wind turbine blade 10 is being conveyed towards the first workstation 61 along the first direction D1 but has not reached that point yet. On the other hand, Figure 3B corresponds to a situation in which almost the complete assembled wind turbine blade 10 has passed along the first workstation 61. Accordingly, a corresponding post moulding manufacturing step has been carried out over almost the complete length of the assembled wind turbine blade 10, with only the blade tip portion 14 remaining. Finally, Figure 3C shows the situation in which the assembled wind turbine blade 10 is being discharged from the production line 5, after the post moulding manufacturing step implemented in the first workstation 61 has been carried out. As shown in Figures 3A-3C, additional workstations 60, i.e. a second workstation 62 arranged side-by-side with the first workstation 61, and a third workstation 63 arranged partially facing the first workstation 61 may be provided. Further details regarding such additional workstations 60 will be provided below. The second 62 and third 63 workstations may be equipped with tools and materials for carrying out second and third manufacturing steps, different from the first manufacturing step carried out at the first workstation 61. In this manner, each workstation 60 may be specialized for a specific post-moulding manufacturing step, thus increasing the overall efficiency of the overall process.

As shown in the sequence of Figures 3A-3C, the relative movement of the assembled wind turbine blade 10 with respect to the first workstation 61 allows an efficient and safe operation. In particular, the footprint needed for the production line 5 is significantly reduced when compared with a traditional wind turbine blade production line. In traditional production lines, a stationary assembled wind turbine blade 10 would be first arranged at a certain location including a very large workstation extending over the complete length of the assembled wind turbine blade 10. The corresponding workstation would be used to implement all required post moulding manufacturing steps and personnel may need to move around the complete length of the assembled wind turbine blade to implement the required activities. On the contrary, in the production line 5 shown in Figures 3A-3C, the first workstation 61 does only need to span for a small portion of such length.

As shown in Figures 3A-3C, in an example, the conveyor system 70 of the production line 5 may comprise a supporting and straightening system 80 for supporting and straightening the assembled wind turbine blade 10. The supporting and straightening system 80 may comprise a first blade support 81, configured for supporting a blade root portion 16 of the assembled wind turbine blade 10. The supporting and straightening system 80 may also comprise at least a second blade support 82, 83 configured for supporting a blade tip portion 14 of the assembled wind turbine blade 10.

The use of blade supports 81, 82, 83 at both the blade root portion 16 and the blade tip portion 14 of the assembled wind turbine blade 10 may improve stability during the manufacturing operation, especially bearing in mind that a post moulding manufacturing step is being carried out while the assembled wind turbine blade 10 is in movement. In particular, the conveyor system 70 may be configured to move the assembled wind turbine blade 10 at a linear speed in a range of 0.5 to 1.0 meters/minute, specifically at about 0.7 meters/minute.

The blade supports 81, 82, 83 may be configured, not only to support the assembled wind turbine blade 10, but also to straighten it. In particular, as mentioned above, some wind turbine blades may comprise a certain curvature or pre-bending. Such curvature results in an assembled wind turbine blade 10 that is not straight and, more particularly, in an assembled wind turbine blade 10 whose blade tip portion 14 significantly deviates from a longitudinal direction of the rest of the blade. Such deviation can result in more difficult or challenging conditions for the operators during post moulding manufacturing steps. This may be especially the case for post moulding manufacturing steps requiring physical access to an interior and/or surface of the assembled wind turbine blade 10.

In some examples, the supporting and straightening system 80 may comprise at least two blade supports 82, 83 for supporting a blade tip portion 14 of the assembled wind turbine blade 10. As shown in more detail below, the arrangement of two separate blade supports 82, 83 may facilitate, not only stability of the operation, but also the mentioned straightening of the assembled wind turbine blade 10.

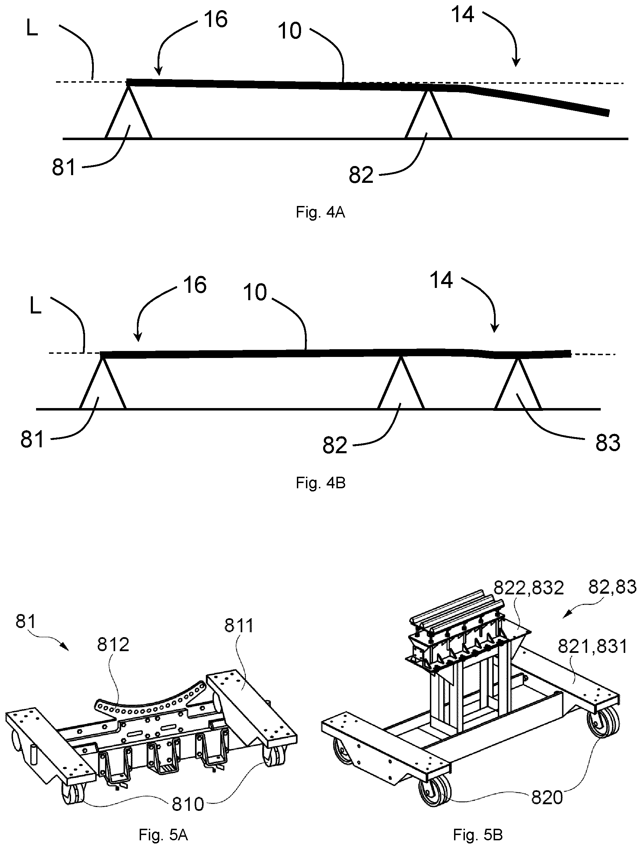

Figure 4A shows a situation in which an assembled wind turbine blade 10 is supported by two blade supports 81, 82. A first blade support 81 is arranged at the blade root end 17 of the blade root portion 16 whereas a second blade support 82 is arranged at about two thirds of the length of the assembled wind turbine blade 10. In this example, the assembled wind turbine blade 10 is positioned such that the upwind shell part 24 is facing downwards. Accordingly, the tip portion of the assembled wind turbine blade 10 is significantly curved downwards. Indeed, the blade tip portion 14 of the assembled wind turbine blade 10 is clearly deviating from a horizontal line, L, indicative of the longitudinal axis of the assembled wind turbine blade 10. Consequently, operators may need to work at significantly different heights, thus reducing the safety and efficiency of the operation. Similarly, in case of using automated systems, operation at different height does also comprise a challenge.

Figure 4B shows a situation in which a straightening system 80 is used to support the assembled wind turbine blade 10. Indeed, in this example, a third blade support 83 may be provided in the blade tip portion 14 towards a blade tip end 15 of the assembled wind turbine blade 10. In particular, in an example, a second blade support 82 may be provided in a position of 50% to 70% of the length of the assembled wind turbine blade 10, whereas the third blade support 83 may be provided in a position corresponding to between 80% and 95% of the length of the assembled wind turbine blade 10. It is understood that the precise position of the second blade support 82 and the third blade support 83 may be determined for each different wind turbine blade 10. In particular, different aspects such as the specific blade pre-bend or the location of structural reinforcements may be taken into account in order to define the most adequate arrangement. For the sake of clarity, the length of the assembled wind turbine blade 10 is interpreted as the distance from the blade root end 17 to the blade tip end 15 when considering a straight, or straighten, blade. The arrangement of such a third blade support 83 may compensate for the downward curvature resulting from the pre-bending of the assembled wind turbine blade 10. Accordingly, the straightened assembled wind turbine blade 10 may be substantially aligned with the horizontal line, L, over the whole length of the assembled wind turbine blade 10. It is important to note that wind turbine blades 11 are designed to withstand significant loads during operation. Accordingly, the bending induced by the third blade support 83 in Figure 4B, which counteracts the natural curvature or pre-bending of the assembled wind turbine blade 10, does not impose significant loads on the assembled wind turbine blade 10.

By providing the supporting and straightening system 80, which in the example of Figure 4B comprises the use of a third blade support 83, a substantially uniform height can be obtained throughout the whole length of the assembled wind turbine blade 10. Consequently, manufacturing steps carried out in the first workstation 61 can be done at constant heights, thus improving ergonomics and increasing efficiency. Furthermore, automation of the manufacturing steps may also be facilitated by such substantially constant height. In examples of the disclosure, working height along the assembled wind turbine blade 10 may be in the range from 1.0 to 1.8 meters, specifically between 1.2 - 1.5 meters.

Different configurations may be envisaged for the supporting and straightening system 80 depending on, e.g. the orientation of the assembled wind turbine blade 10. As an example, a curvature pointing upwards may be observed if the orientation of the assembled wind turbine blade 10 is such that the upwind shell part 24 is facing upwards. In such a case, in order to compensate for the upwards curvature, a third blade support 83 may be provided in which a clamp may be arranged to correct the upwards orientation in that section of the assembled wind turbine blade 10.

The assembled wind turbine blade 10 may also be provided with either the leading edge 18 or the trailing edge 20 pointing upwards. In such a case, the curvature induced by the pre-bending would result in a curvature in the horizontal plane, i.e. the blade tip portion 14 of the assembled wind turbine blade 10 would deviate from the first direction D1 in a horizontal plane. In such case, a third blade support 83 may be provided, which may also include clamps or other fixation means intended to bend the assembled wind turbine blade 10 so as to correct such curvature.

Other designs may be envisaged for the supporting and straightening system 80. In particular, instead of using two separate blade supports 82, 83 for the blade tip portion 14, a single, extended, blade support may be employed. Such extended blade support may comprise e.g. a rigid beam extending over the last portion of the assembled wind turbine blade 10. Such a rigid beam may be clamped to the assembled wind turbine blade 10, such that straightening of the same may be forced.

Figures 5A and 5B schematically illustrate a perspective view of a blade support 81 for the blade root portion 16 (Figure 5A) and a perspective view of a blade support 82, 83 for supporting a blade tip portion 14 (Figure 5B). As shown, in an example, the blade supports 81, 82, 83 may comprise a wagon 811, 821, 831. The wagons 811, 821, 831 may be configured for supporting respective blade fixtures 812, 822, 832. The wagons may be provided with wheels 810, 820 so as to facilitate the movement to convey the assembled wind turbine blade 10. It should be noted that a wagon is to be understood as any kind of vehicle intended for transporting a load. Other terms, like cart or carriage, are also comprised in the meaning of a wagon according to the present disclosure. Furthermore, although wheels 810, 820 may be provided in some examples, other means to facilitate movement, such as rollers or slides, may also be envisaged in other examples.

As shown in Figures 5A and 5B, different blade fixtures 812, 822, 832 may be used for the blade root portion 16 and for the blade tip portion 14. The blade fixtures may be adapted for supporting a specific portion of a blade 10, and/or may be adapted for a specific blade 10 or blade type. I.e. a fixture developed for a tip of a 70 meter long blade may not only be different from a fixture developed for the root of the same blade 10, but may also be different from a fixture developed for the tip of a 90 meter long blade 10.

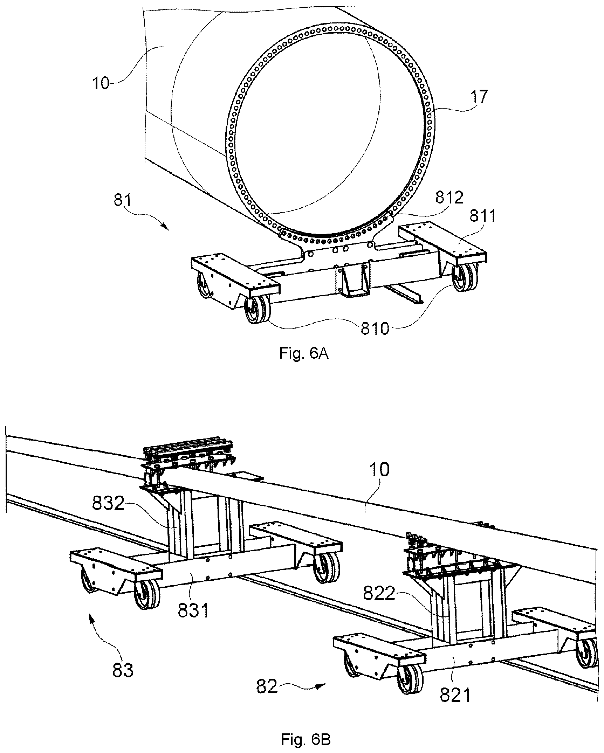

In an example, the blade fixture 812 used in the blade support 81 configured for the blade root portion 16 may comprise a sector of a flange, i.e. a circumferential sector comprising a plurality of holes. As shown in Figure 6A, the blade fixture 812 may be attached to a corresponding blade flange arranged at the blade root end 17 of the blade root portion 16. Indeed, a blade flange may be typically provided at the blade root end 17 of the blade. The blade flange is provided to enable a bolted connection between the blade 11 and a pitch bearing in a wind turbine 2 (see Figure 1). However, such blade flange may also be used during fabrication and manipulation operations.

In particular, as shown in Figure 6A, a connection between the blade flange and the blade fixture 812 of the root blade support 81 may ensure proper stability of the assembled wind turbine blade 10 when moving the blade 10 while carrying out post moulding manufacturing steps in the production line 5. The use of a bolted connection may be especially beneficial to prevent any uncontrolled rotation of the assembled wind turbine blade 10 during convey of the same along the first workstation 61, i.e. while operators and/or tools may be actively working on the assembled wind turbine blade 10. Such stability may help increase the safety and quality of the process.

As shown in Figure 5B, the blade support(s) 82, 83 for the blade tip portion 14 of the assembled wind turbine blade 10 may also comprise corresponding wagons 821, 831 and blade fixtures 822, 832. In this case, the blade fixtures 822, 832 may not comprise a bolted connection. Instead, a cradle may be provided to facilitate supporting the assembled wind turbine blade 10 in a gentle manner. Furthermore, clamps and/or slings (not shown) may be provided in the blade fixtures 822, 832 to provide stability and limit or constrain undesired movements. Figure 6B shows an example comprising two blade supports 82, 83 supporting a blade tip portion 14 of an assembled wind turbine blade 10. In this example, the blade fixture 832 for the blade support 83 arranged at an outermost portion of the assembled wind turbine blade 10, i.e. closest to the blade tip end 15, may comprise a clamp. On the other hand, the other blade support may 82 comprise a blade fixture 822 featuring a base or cradle to basically support the weight of the assembled wind turbine blade 10.

In examples of the disclosure, at least one of the blade supports 81, 82, 83 may have an adjustable height to adjust a vertical position of the assembled wind turbine blade 10 with respect to a ground level at a location of the corresponding blade support 81, 82, 83. In some examples, the assembled wind turbine blade 10 may be inclined during manufacturing. The inclination may be temporary and in some cases may only be partial, i.e. only a portion of the blade 10 is inclined.

In examples, all the blade supports 81, 82, 83 may be provided with such adjustable height. Accordingly, the vertical position of the assembled wind turbine blade 10 may be adjusted while maintaining a substantially horizontal orientation. By adjusting the vertical position of a horizontally arranged assembled wind turbine blade 10, the working height for the operators may be controlled. In order to provide an adjustable height, the blade supports 81, 82, 83 and, more specifically, the blade fixtures 812, 822, 832 may be provided with an actuator, e.g. a hydraulic or electromechanical actuator.

In examples of the disclosure, a kit may be envisaged to adjust the vertical position or height of the assembled wind turbine blade 10. Hence, a kit may comprise one or more blade supports 81, 82, 83 for supporting the assembled wind turbine blade 10. As already described with reference to Figures 5A-5B and 6A-6B, the blade supports 81, 82, 83 may comprise a wagon 811, 821, 831 and a blade fixture 812, 822, 832 connectable to the wagon 811, 821, 831. The kit may comprise a plurality of blade fixtures 812, 822, 832, which may all be connectable to the same wagon 811, 821, 831. The different blade fixtures 812, 822, 832 in the plurality of blade fixtures 812, 822, 832 may exhibit different sizes. Accordingly, by selecting different blade fixture 812, 822, 832, a vertical position of the supported section of the assembled wind turbine blade 10 with respect to a ground level may be modified.

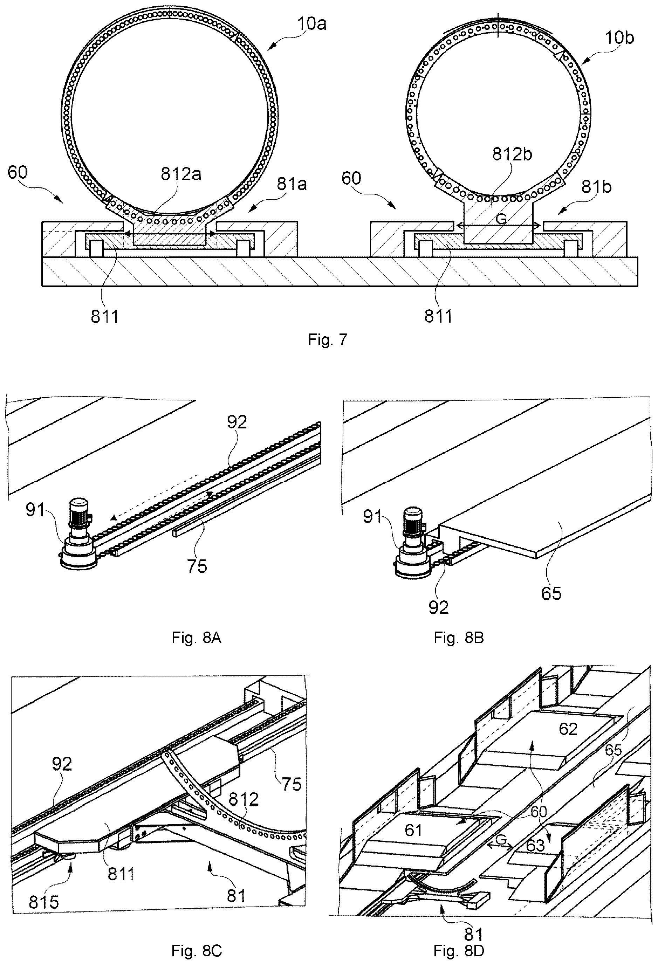

The use of such a kit may be particularly advantageous to increase efficiency and ergonomics of the production line 5 when processing assembled wind turbine blades 10 of different dimensions. As an example, Figure 7 shows a situation in which the same production line 5 may be used to work on assembled wind turbine blades 10a, 10b of different sizes. In this example, blade root supports 81a, 81b comprising the same wagon 811 but different blade fixtures 812a, 812b may be employed. Both fixtures 812a, and 812b in this case are adapted to support a root section of a blade. In this example, a blade fixture 812a with a reduced height may be selected while manufacturing a large assembled wind turbine blade 10a, whereas a blade fixture 812b with an increased height may be employed when manufacturing an assembled wind turbine blade 10b exhibiting a smaller diameter. With this approach, a working height for the operators and/or the automatic systems, which may be located in a corresponding workstation 60, may remain substantially constant. As a result, improved safety and better quality of the manufactured blades may be achieved. In particular, the blade fixtures 812a, 812b may be designed such that, regardless of the size of the assembled wind turbine blade 10, a working height (without requiring reconfiguring workstations) remains in a range from 1.0 to 1.8 meters, specifically between 1.2 and 1.5 meters.

Moreover, only the blade fixtures 812a, 812b may need to be adapted whereas the same wagons 811 may be used. By not replacing the complete blade support 81, reduced cost and improved logistics may be achieved. In particular, as shown in more detail below, the blade supports 81, 82, 83 may engage with a conveyor system 70. In particular, the wagons 811, 821, 831 of the blade supports 81, 82, 83 may engage with the conveyor system 70. By utilizing the same wagons 811, 821, 831, even when manufacturing blades of different sizes, cost and logistics of the overall production line 5 may be improved.

In some examples, a production line 5 may be provided in which the blade supports 81, 82, 83 may be configured for rotating the assembled wind turbine blade 10. In these examples, an orientation of the assembled wind turbine blade 10 may be adjusted while in the production line 5. To this end, the blade supports 81, 82, 83 may be provided with a rotation mechanism. As an example, bearings may be arranged to rotatably support the assembled wind turbine blade 10, and a motor or actuator may be used to induce rotation of the assembled wind turbine blade 10.

As already described, a conveyor system 70 is used to move the assembled wind turbine blade 10 in a first direction D1. As already shown in Figure 3B, in an example, the conveyor system 70 may comprise a guide system 75. The guide system 75 may extend in the first direction D1, or in a direction substantially parallel to the first direction D1. The guide system 75 may be configured for engaging with the blade supports 81, 82, 83 and, more specifically, with the wagons 811, 821, 831. The guide system 75 may be further configured for guiding the blade supports 81, 82, 83, and more specifically the wagons 811, 821, 831, along the first direction D1.

As shown in Figure 3B, the guide system 75 may comprise a rail system. The rails may be arranged on a floor of the assembly plant. Alternatively, in some examples, the guide system 75 may comprise rails or guides arranged on a ceiling and/or on a vertical wall of the assembly plant. In all cases, the rails may be configured for engaging with the blade supports 81, 82, 83 transporting the assembled wind turbine blade 10. It will be clear that a different number of guides may be used, as well as different shapes and types of guides.

In an example, the conveyor system 70 of the production line 5 may comprise a transmission chain 92 and a motor 91. Such an example is schematically depicted in Figures 8A-8E. The wagons 811, 821, 831 may be configured for engagement with the transmission chain 92 and the motor 91 may be configured for transferring motion to the transmission chain 92. Instead of a chain 92, a belt or similar element may also be used in examples of the disclosure. In order to control linear speed, a frequency inverter may be employed to control the motor 91.

Figures 8A-8E show different views of a production line 5 according to such an example. Figure 8A shows an initial step in which a motor 91 and a corresponding transmission chain 92 are arranged in a floor of an assembly plant. The motor 91 may be configured to move the transmission chain 92 along a first direction. Furthermore, a guide system 75, comprising rails, may also be arranged extending in a direction parallel to the transmission chain 92.

Figure 8B schematically shows a further step in which a base scaffold 65 may be arranged to protect the transmission chain 92 and the guide system 75. The base scaffold 65 may substantially extend for the whole length of the production line 5.

Figure 8C shows a detail of an engagement between a blade support 81 and the guide system 75. Thus, the wagon 811 of the blade support 81 may comprise an engagement system 815, which may be configured for engagement with a rail of the guide system 75. Furthermore, although not shown in Figure 8C, the wagon 811 may also engage with the transmission chain 92. Accordingly, upon actuation of the motor 91, the transmission chain 92 may start moving and pulling the blade support 81. Please note that the assembled wind turbine blade 10 is not shown in Figures 8C and 8D to facilitate understanding of the assembly.

Regarding Figure 8D, this provides a more general view of the production line 5. In this case, a plurality of workstations 60 are depicted. As mentioned before, a base scaffold 65 may be provided along the production line 5. The base scaffold 65 may be used to provide a substantially uniform base surface around the assembled wind turbine blade 10 when the latter is moving. In order to increase the safety of the operations, a minimum gap, G, may be defined. The gap G may be enough to enable transit of the moving assembled wind turbine blade 10 while minimizing the risk of falls of either tools or personnel.

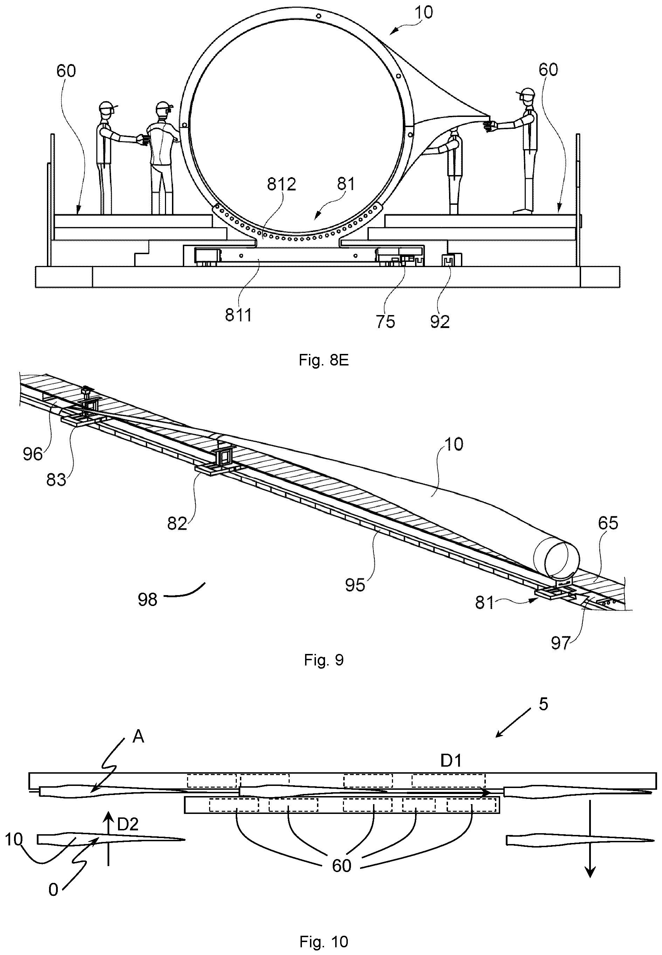

Figure 8E shows another view of the example of a production line 5 schematically depicted in Figures 8A-8D. In this view, an assembled wind turbine blade 10 is mounted on a corresponding blade support 81. As shown, operators are located in corresponding workstation 60, such that post moulding manufacturing steps can be carried out. Also depicted in Figure 8E is the guide system 75 and the transmission chain 92. In this example, an eccentric transmission is implemented. In other words, the pulling force to move the wagons, e.g. wagon 811 shown in Figure 8E, is applied on a lateral side of the wagon 811. In other examples, a non-eccentric arrangement may be envisaged as shown in more detail below.

Production lines 5 comprising multiple workstations 60 may be envisaged (see Figures 3A-3C or Figure 8D). Indeed, in an example of the disclosure, the production line 5 may comprise at least a second workstation 62, 63. The at least second workstation 62, 63 may be configured for carrying out a post moulding manufacturing step on the assembled wind turbine blade 10 while the assembled wind turbine blade 10 passes along the second workstation 62, 63.

Dedicated workstations 60 may be provided for specific post moulding manufacturing steps. In this manner, both the equipment and the personnel assigned to a specific workstation 60 may be specialized, thus improving the reliability of the manufacturing operations. Furthermore, as shown in Figure 3B, different workstations 60 may be simultaneously in reach of the assembled wind turbine blade 10. Accordingly, different post moulding manufacturing steps may be carried out in parallel at different locations of the assembled wind turbine blade 10. In this manner, the throughput of the production line 5 may be increased. Furthermore, by defining specific workstations 60, each of them extending only for a portion of the length of the assembled wind turbine blade 10, the overall footprint of the production line 5 may be significantly reduced.

Multiple configurations may be envisaged for production lines 5 comprising a plurality of workstations 60. In an example, a second workstation 62 may be arranged side-by-side to the first workstation 61. Therefore, the second workstation 62 may also extend along a direction, substantially parallel to the first direction D1, over a length that may be less than the longitudinal length of the assembled wind turbine blade 10. In particular, the first workstation 61 and the second workstation 62 may be arranged at a same side with respect to the assembled wind turbine blade 10. The conveyor system 70 may be configured for conveying the assembled wind turbine blade 10 in the first direction D1 such that the assembled wind turbine blade 10 passes, not only along the first workstation 61, but also along the second workstation 62. Such an example is visible in Figures 3A-3C and also in Figure 8D, in which production lines 5 comprising a plurality of workstations 60 are depicted.

In other configurations, a different arrangement of the multiple workstations 60 may be provided. Hence, in an example, the first workstation 61 and the second workstation 62 may be arranged at a first side and at a second side with respect to the assembled wind turbine blade 10. In particular, the first workstation 61 and the second workstation 62 may at least partially face each other. The first workstation 61 and the second workstation 62 may be spaced apart by a predetermined gap. The gap may be dimensioned such that the assembled wind turbine blade 10 can be conveyed by the conveyor system 70 while post moulding manufacturing steps are carried out from both the first workstation 61 and the second workstation 62. In general, each individual workstation 60 may be configured or designed for a specific task or manufacturing step(s). Each individual workstation 60 may include tools enabling the execution of the specific task or manufacturing step(s). In an example, one workstation may be adapted for painting, another one for trimming, and a third one for adding aerodynamic devices.

Such a configuration is also depicted in Figures 3A-3C and Figure 8D. Based on the same figures, one can also observe that the configurations with workstations 60 arranged side-by-side, and the configurations with workstations 60 arranged face-to-face, are not mutually exclusive. On the contrary, a combination of both side-to-side and face-to-face workstation 60 may also be implemented. In this manner, optimum access to different areas of the assembled wind turbine blade 10 may be provided during movement of the latter.

A further example of a production line 5 according to the present disclosure will be now described with reference to Figures 9 to 16. In this example, a non-eccentric, e.g. a centered, pulling of the blade supports 81 82, 83 may be carried out. As shown in Figure 10, the assembled wind turbine blade 10 may be first mounted on corresponding blade supports 81, 82, 83 at a first location, labelled as 0 in Figure 10. Subsequently, the assembled wind turbine blade 10 may be moved to a starting point, labelled as A, of the production line 5. In the example shown in Figure 10, the movement from the first location 0 to the starting point A may comprise a movement in a second direction D2, which may be substantially perpendicular to the first direction D1. Once in the starting point A, the blade supports 81, 82, 83 may be engaged with a transmission chain 92 such that the assembled wind turbine blade 10 may be conveyed. As previously mentioned, a belt or similar element may be employed instead of a chain 92 to transmit the movement from the motor 91 to the blade supports 81, 82, 83.

As also shown in Figure 10, upon passing along the production line 5 or, more precisely, along the workstations 60 of the production line 5, the assembled wind turbine blade 10 may be discharged from the production line 5 by displacing it in a direction substantially perpendicular to the first direction D1 and substantially parallel to the second direction D2. In other variants, the assembled wind turbine blade 10 may be simply discharged by continuing a movement in the first direction D1 pass the corresponding workstations 60.

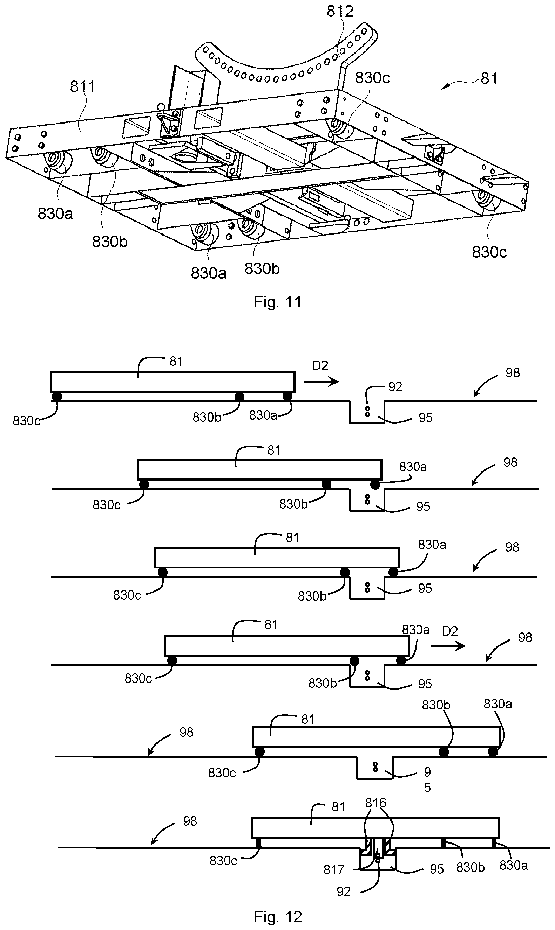

As seen in Figure 10, the conveyor system 70 may be configured for conveying the assembled wind turbine blade 10 not only in the first direction D1 but also in other directions. Specifically, as shown in Figure 10 or in more details in subsequent Figures 11 and 12, the conveyor 70 may be configured for conveying the assembled wind turbine blade 10 in the first direction D1 and in a second direction D2 perpendicular to the first direction D1. However, it is understood that other directions may also be envisaged. In order to facilitate such degrees of freedom, additional guide systems 75 may be arranged. Furthermore, blade supports 81, 82, 83 may also be provided with directional wheels or rollers, such that the direction of the movement may be adjusted.

Furthermore, in some additional examples, additional workstations may be arranged with an orientation different from the first direction D1. Accordingly, the conveyor system 70 may be configured to change the orientation of the assembled wind turbine blade 10 and the direction of the corresponding movement such that the assembled wind turbine blade 10 may be passes along workstations arranged with different relative orientations. Specifically, U-shaped or S-shaped production lines 5 may also be envisaged in which a plurality of workstations may be arranged with different orientations.

In this example, a transmission chain 92 and a guide system 75 may also be provided. Nevertheless, unlike in the example of Figures 8A-8E, such elements may not protrude above a floor 98 level of the assembly plant. Instead, a trench 95 may be defined in a floor 98 of the assembly plant as shown in, e.g. Figure 9. The transmission chain 92 and the guide system 75 may be provided in the trench 95.

A particular complexity associated with this example relates to the jump over the trench 95. That is, in order to transfer the assembled wind turbine blade 10 from the first location 0 to the starting point A, a trench 95 may need to be overcome. To this end, blade supports 81, 82, 83 may be especially designed to overcome the trench 95. Figure 11 shows an example of such a blade support 81. In this example, the blade support 81 may comprise three sets of wheels 830a, 830b, 830c, which may be configured to turn so as to allow movement of the assembled wind turbine blade 10 in different directions. Specifically, the wheels 830a, 830b, 830c may be configured to move the assembled wind turbine blade 10 along the first direction D1 and along a second direction D2 substantially perpendicular to the first direction D1. Two of those sets of wheels 830a, 830b may be configured to lie on an opposite side of the trench 95 than the other set of wheels 830c when in the starting point A and, consequently, during convey of the assembled wind turbine blade 10 along the first direction D1. Furthermore, the separation between the two sets of wheels 830a, 830b intended for a same side of the trench 95 may be larger than a width of the trench 95 itself.

The sequence to overcome the trench 95 with such a blade support 81 is schematically illustrated in Figure 12. Hence, the blade support 81 may be first moved along the second direction D2. While crossing the trench 95, the foremost wheels 830a may be left in the air whereas the second set of wheels 830b may be providing support. Due to the separation between the two sets of wheels 830a, 830b, the foremost set of wheels 830a will touch the floor 98 at an opposite side of the trench 95 before the second set of wheels 830b is left hanging in the air. Subsequently, the blade support 81 may be further moved in the second direction D2 until a center of the blade support 81 is aligned with the trench 95. During the movement, the second set of wheels 830b may be left in the air while the foremost set of wheels 830a provides support. Once the aligned position is reached, the wheels 830a, 830b, 830c may be rotated as shown in the lowermost figure. With this new orientation of the wheels 830a, 830b, 830c, the assembled wind turbine blade 10 may be conveyed along the direction D1.

In an alternative variant, two different sets of wheels may be arranged to provide support while moving the assembled wind turbine blade 10 in the two different directions D1, D2. In this variant, those sets of wheels may not be configured to rotate so as to change the orientation of the assembled wind turbine blade 10. Instead, a first set of wheels may then be provided to enable movement in the first direction D1 and a second set of wheels may be provided to enable movement in the second direction D2 perpendicular to the first direction D1. In order to switch from one set of wheels to the other, a retractable mechanism may be employed. Accordingly, only one set of wheels at a time may be extended and providing support to the assembled wind turbine blade 10, whereas the other set of wheels may remain in a retracted position.

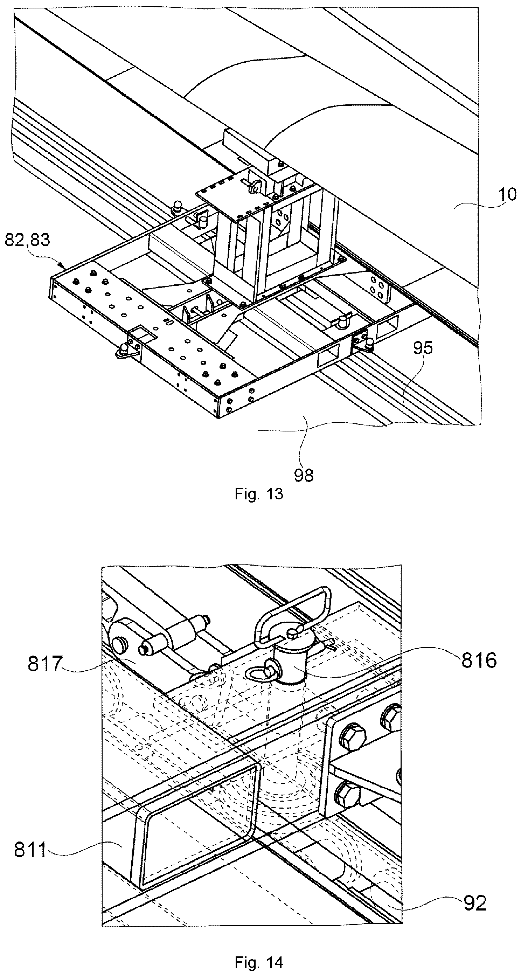

It is understood that, even if Figures 11 and 12 refer to the blade support 81 configured for supporting a blade root portion 16 of the assembled wind turbine blade 10, the same mechanism may be employed by the remaining blade supports 82, 83. In that sense, Figure 13 provides a partial view of an assembled wind turbine blade 10 with one of the corresponding blade supports 82, 83 configured for supporting a blade tip portion 14 of the assembled wind turbine blade 10.

Once in the centered position at the starting point A, an alignment system 816 may be lowered from the blade support 81 as shown in the lowermost image of Figure 12. In particular, the alignment system 816 may be configured to protrude against the vertical walls of the trench 95, thus providing a guiding function. Figure 14 provides an example in which such an alignment system 816 is schematically depicted.

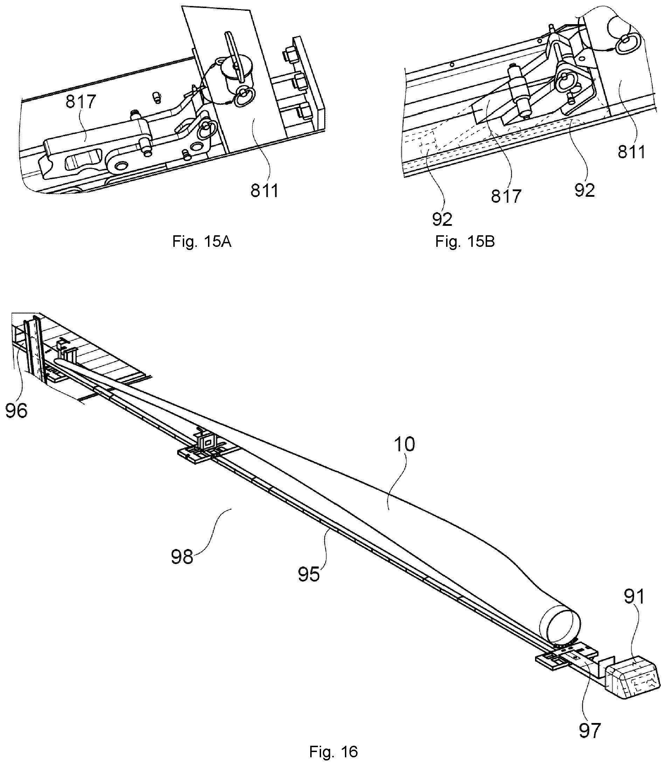

As schematically illustrated in the lowermost image of Figure 12, the blade support 81 and, more specifically, a wagon 811 of the blade support 81, may engage a transmission chain 92. In this manner, the operation of the chain 92 may facilitate movement of the assembled wind turbine blade 10 along the first direction D1. Different engaging mechanisms are known to the skilled person. As an example, Figures 15A-15B show an engagement system 817 in both the disengaged (Figure 15A) and in the engaged (Figure 15B) positions. In this example, in order to engage with the transmission chain 92, the engagement system 817 may be automatically lowered.

Furthermore, as in the example described above with reference to Figures 8A-8E, a driver or motor may also be needed to move the transmission chain 92 and, consequently, to pull the blade supports 81, 82, 83. In this case, a motor 91 may be provided at one end of the production line 5 as depicted in Figure 16.

In still other examples, a production line 5 may be provided without such a guide system 75. In particular, a conveyor system 70 may be envisaged in which the blade supports 81, 82, 83 may comprise self-propelled vehicles, e.g. self-propelled modular transporters, SPMTs. In these examples, the blade supports 81, 82, 83 may be controlled such that they move along a certain direction without the assistance of any guide system 75. To this end, the blade supports 81, 82, 83 may comprise wagons 811, 821, 831 as shown in, e.g. Figures 5A-5B, and a motor may be provided in the corresponding wagons 811, 821, 831. Furthermore, the wheels 810, 820 of the corresponding wagons 811, 821, 831 may be controllable so as to adjust a moving direction.

Workstations 60 may provide convenient access to the different areas of the assembled wind turbine blade 10. However, access to certain specific regions may remain relatively challenging. In particular, access to the blade tip end 15 or to an interior of the assembled wind turbine blade 10 may be limited or difficult. For this reason, in some examples, the production line 5 may comprise a movable tip platform 96 configured for providing access to a blade tip portion 14 of the assembled wind turbine blade 10 and/or a movable root platform 97 configured for providing access to a blade root portion 16 of the assembled wind turbine blade 10.

Such movables platforms 96, 97 are depicted in the example shown in Figure 9, although they may also be applied in other examples, such as in the system depicted in Figures 3A-3C or in Figures 8A-8E. In a variant, such movable platforms 96, 97 may be connected to corresponding blade supports 81, 83. Accordingly, movement of the blade supports 81, 83, e.g. after being pulled by a transmission chain 92 or by self-movement if using self-propelled systems, may also result in the movement of the movable platforms 96, 97. Specifically, a movable tip platform 96 may be connected to the blade support 83 configured for supporting the blade tip portion 14 of the assembled wind turbine blade 10.

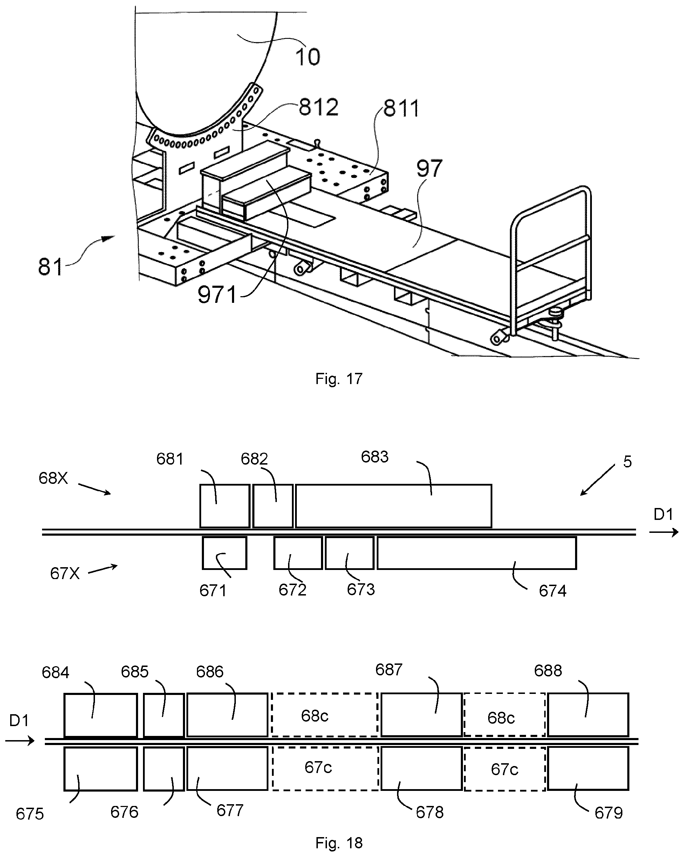

As shown in Figure 17, the movable root platform 97 may be attached to the blade support 81 for the blade root portion 16. The movable root platform 97 may be configured to provide, not only access to the blade root portion 16 of the assembled wind turbine blade 10, but also access to the inside volume of the same. To this end, a number of steps 971 may be arranged in the movable root platform 97 as shown in Figure 17. Alternatively, in other examples (not shown), the movable root platform 97 may comprise both a base platform and an add-on platform. The add-on platform may be mounted on top of the base platform so as to adjust to the effective height of the movable root platform 97. In this variant, steps 971 may no longer be needed to access the interior of the assembled wind turbine blade 10, thus improving the safety of the manufacturing operations.

Furthermore, different add-on platforms may be used for different blade sizes. In other words, as described above in reference to Figure 7, blades exhibiting different diameters may be manufactured. Accordingly, in order to access the interior of the assembled wind turbine blade 10, a different height may be required. On the one hand, in examples comprising steps 971, i.e. in examples like the one depicted in Figure 17, a different number of steps 971 may be used to adjust to the varying height. On the other hand, in examples comprising an add-on platform arranged on top of a base platform, add-on platforms of different width may be used so that a bottom part of the blade root end 17 may be easily accessible for the operators.

Figure 18 provides an example of a production line 5 in which a plurality of workstations 67X, 68X are arranged to implement a number of post moulding manufacturing steps. This is just an example to illustrate an arrangement of a production line 5 but it is understood that further workstations 67X, 68X may be added, or that some of the presented workstations 67X, 68X may be eliminated from the production line 5.

In particular, in this example, the assembled wind turbine blade 10 (not shown) may be conveyed with a flapwise orientation. In particular, an upwind shell part 24 may be facing downwards. A supporting and straightening system 80, comprising, e.g. three blade supports 81, 82, 82, may be used to support and straighten the assembled wind turbine blade 10. With this arrangement, the leading edge 18 and the trailing edge 20 of the assembled wind turbine blade 10 may be disposed at substantially the same height in a horizontal plane. Consequently, workstations 67X arranged at a first side of the assembled wind turbine blade 10 may be particularly suited to carry out manufacturing steps on the leading edge 18 region. Similarly, workstations 68X arranged at the opposite side of the assembled wind turbine blade 10 may be better suited to carry out manufacturing steps on the trailing edge 20 region.

In this example, the following workstations 67X may be provided to conduct post moulding manufacturing steps on a leading edge 18 area of the assembled wind turbine blade 10: leading edge flash trimming 671, first leading edge grinding 672, leading edge cleaning 673, leading edge over lamination 674, second leading edge grinding 675, leading edge sanding 676, leading edge filling 677, leading edge gelcoat first layer 678, or leading edge gelcoat second layer 679. Similarly, a plurality of workstations 68X intended for carrying out post moulding manufacturing steps on a trailing edge 20 portion of the assembled wind turbine blade 10 may comprise: trailing edge grinding 681, trailing edge cleaning 682, trailing edge over lamination 683, trailing edge grinding 684, trailing edge sanding 685, trailing edge filling 686, trailing edge gelcoat first layer 687, or trailing edge gelcoat second layer 688.

Furthermore, as also shown in Figure 18, certain stretches 67c, 68c of the production line 5 may be left with no dedicated workstations 67X, 68X. In particular, such stretches 67c, 68c may be configured as curing regions. Thus, certain post moulding manufacturing steps may require a curing phase. Accordingly, in order to optimize the efficiency of the production line 5, such curing may occur while the assembled wind turbine blade 10 is moving, i.e. while the assembled wind turbine blade 10 is conveyed along the production line 5 and moving from a certain workstation to a next workstation. Hence, in the example shown in Figure 18, first stretches 67c, 68c with no workstations may be provided after the leading edge filling workstation 686 and the trailing edge filling workstation 677. Similarly, second stretches 67c, 68c with no workstations may be provided after workstations for gelcoat application 678, 687.

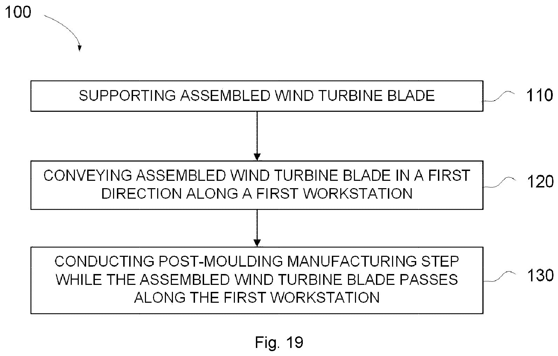

In a further aspect of the present disclosure, a method 100 for carrying a post moulding manufacturing step on an assembled wind turbine blade 10 that comprises an upwind half shell 24 and a downwind half shell 26 joined at a leading edge 18 and at a trailing edge 20 is provided. Figure 19 shows a flowchart of such a method 100. The method 100 comprises, in block 110, supporting the assembled wind turbine blade 10. Block 120 of the method 100 comprises conveying the assembled wind turbine blade 10 in a first direction D1 that is substantially aligned with a longitudinal axis of the assembled wind turbine blade 10 such that the assembled wind turbine blade 10 passes along a first workstation 61. The first workstation 61 is configured for carrying out a post moulding manufacturing step on the assembled wind turbine blade 10 and it extends over a length in a direction that is substantially parallel to the first direction. The length of the first workstation 61 is less than a longitudinal length of the assembled wind turbine blade 10. Moreover, block 130 of the method 100 comprises conducting a post moulding manufacturing step on the assembled wind turbine blade 10 while the assembled wind turbine blade 10 passes along the first workstation 61.

The linear speed of the assembled wind turbine blade 10 while being conveyed may be adjusted. In particular, the speed may be varied depending on the post moulding manufacturing steps carried out. In particular, a moving speed in the range 0.5 to 1.0 meters/minute, specifically about 0.7 meters/minute, may be employed when implementing the method 100.

Various examples of the method 100 may be envisaged. In an example, the method 100 may comprise supporting the assembled wind turbine blade 10 with the upwind half shell 24 facing downwards. Furthermore, the method may also comprise straightening the assembled wind turbine blade 10.

By straightening the assembled wind turbine blade 10, ergonomics and automation of the manufacturing process may be improved. In particular, straightening of the assembled wind turbine blade 10 may allow works to be carried at a substantially constant height. Furthermore, by arranging the assembled wind turbine blade 10 with an upwind half shell 24 facing downwards, a particular suitable arrangement may be provided. Specifically, the leading edge 18 and the trailing edge 20 portion of the assembled wind turbine blade 10 may be arranged at opposing sides of the assembled wind turbine blade 10 in a horizontal plane. Accordingly, simultaneous works on both edges of the assembled wind turbine blade 10 may be conveniently carried out by arranging respective workstations at both sides of the assembled wind turbine blade 10.

In particular, in a variant of this example, straightening the assembled wind turbine blade 10 may comprise using blade supports 81, 82, 83 for supporting the assembled wind turbine blade 10. Specifically, using a blade support 81 for supporting a blade root portion 16 of the assembled wind turbine blade 10 and two blade supports 82, 83 for supporting a blade tip portion 14 of the assembled wind turbine blade 10.

In this example, the blade supports 81, 82, 82 may be used, not only to support and assist during convey of the assembled wind turbine blade 10, but also in the straightening of the same. In this manner, the use of further devices, e.g. devices specifically intended for straightening the assembled wind turbine blade 10, may be avoided.

In some variants, supporting the assembled wind turbine blade 10 may comprise rotatably supporting the assembled wind turbine blade 10. Besides, conveying the assembled wind turbine blade 10 may comprise rotating the assembled wind turbine blade 10 while being conveyed.

According to these variants, different sections of the assembled wind turbine blade 10 may be arranged to face different workstations or different sections within a specific workstation. By providing a rotatable support, e.g. by means of a bearing system arranged on the blade supports 81, 82, 83, the need for additional systems to rotate the assembled wind turbine blade 10 about its longitudinal axis may be avoided. Consequently, cost may be reduced and efficiency of the manufacturing process may be enhanced by avoiding the use of intermediate steps, specifically aimed at rotating the assembled wind turbine blade 10.

In still other examples, the method 100 may comprise conveying the assembled wind turbine blade 10 in a first direction D1 such that the assembled wind turbine blade 10 passes along at least a second workstation 62 configured for carrying out a post moulding manufacturing step on the assembled wind turbine blade 10. The second workstation 62 may also extend over a length in a direction that is substantially parallel to the first direction D1. The length of the second workstation 62 may also be less than a longitudinal length of the assembled wind turbine blade 10. The method according to this other examples may comprise conducting at least a second post moulding manufacturing step on the assembled wind turbine blade 10 while the assembled wind turbine blade 10 passes along the second workstation 62.

As previously explained, for instance in reference to Figures 8E or Figure 18, a production line 5 comprising multiple workstations 60 may be provided. Accordingly, when implementing a method in such a production line 5, a more optimized method 100 may be achieved by allocating specific post moulding manufacturing steps to specific workstation 60. An increased specialization may result in improved skills for the operators and in a more focused arrangement of equipment and tools.

In some cases, the production line 5 may be configured such that more than one post moulding manufacturing steps can be carried out in a particular workstation 60. Furthermore, in an example, the method may comprise that, after conducting a certain post moulding manufacturing step on the assembled wind turbine blade 10, the assembled wind turbine blade 10 may be transported again to a starting point of the production line 5. Then, the assembled wind turbine blade 10 may be conveyed along the first direction D1 such that the assembled wind turbine blade 10 passes along the first workstation (61) for a second time.

In production lines 5 comprising multiple workstation 60, the assembled wind turbine blade 10 may be first passed along all the multiple workstations 60 in the production line 5. Subsequently, the assembled wind turbine blade 10 may be transferred back to the starting point so that it can be conveyed again along all the workstations 60. When doing so, different post moulding manufacturing steps may be carried out in a same workstation during the first sequence, i.e. during the first pass of the assembled wind turbine blade 10 blade along the corresponding workstation than in the second iteration. Furthermore, in some variants, at least some of the workstations 60 may only be employed once, i.e. during one of the iterations or conveying of the assembled wind turbine blade 10.

In a variant of a method comprising multiple passes of the assembled wind turbine blade 10 along the workstations 60, the method may comprise changing the orientation of the assembled wind turbine blade 10 about a longitudinal axis of the assembled wind turbine blade 10.

In order to enable such rotation, the blade supports 81, 82, 83 may comprise a rotating actuator. Hence, after reaching an end point of the production line 5, the assembled wind turbine blade 10 may be rotated with the blade supports 81, 82, 83. Consequently, when placed again in the starting point of the production line 5, a different orientation may be provided. In other examples, rotation of the assembled wind turbine blade 10 may require additional equipment. In particular, after reaching an end point of the production line 5, the assembled wind turbine blade 10 may be hoisted and separated from the blade supports 81, 82, 83. The assembled wind turbine blade 10 may then be rotated and lowered again on the blade supports 81, 82, 83. In this example, the blade supports 81, 82, 83 and, more specifically, the blade fixtures 812, 822, 832 may be adjustable so that they can adapt to the geometry of the blade surface now being directly supported, i.e. to the blade surface in contact with the blade fixtures 812, 822, 832. Alternatively, a kit with different blade fixtures 812, 822, 832 may also be provided. Accordingly, before lowering of the assembled wind turbine blade 10, a new set of blade fixtures 812, 822, 832 may be arranged to better adapt to the new orientation of the assembled wind turbine blade 10.

As mentioned above, different post moulding manufacturing steps may be envisaged in different methods according to the present disclosure. In particular, conducting the one or more post moulding manufacturing steps in block 130 of method 100 may comprise conducting at least one of the following steps: steps: trimming, painting, cleaning, application of leading edge protection, sanding or grinding.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A production line (5) for manufacturing a wind turbine blade (11), the production line (5) comprising:
a first workstation (61) configured for carrying out a post moulding manufacturing step on an assembled wind turbine blade (10) when the assembled wind turbine blade (10) passes along the first workstation (61) while being conveyed in a first direction (D1) that is substantially aligned with a longitudinal axis of the assembled wind turbine blade (10), the first workstation (61) extending over a length in a direction that is substantially parallel to the first direction (D1), the length of the first workstation (61) being less than a longitudinal length of the assembled wind turbine blade (10); and
a conveyor system (70) configured for conveying the assembled wind turbine blade (10) in the first direction (D1) such that the assembled wind turbine blade (10) passes along the first workstation (61).

2. The production line (5) of claim 1, wherein the conveyor system (70) comprises a supporting and straightening system (80) for supporting and straightening the assembled wind turbine blade (10), the supporting and straightening system (80) comprising a first blade support (81) configured for supporting a root portion (16) of the assembled wind turbine (10) and at least a second blade support (82) configured for supporting a tip portion (14) of the assembled wind turbine blade (10).

3. The production line (5) of claim 2, wherein the supporting and straightening system (80) comprises at least two blade supports (82, 83) configured for supporting a tip portion (14) of the assembled wind turbine blade (10).

4. The production line (5) of claims 2 or 3, wherein the blade supports (81, 82, 83) comprise a wagon (811, 821, 831) configured for supporting a respective blade fixture (812, 822, 832).

5. The production line (5) of claim 4, wherein the conveyor system (70) comprises a guide system (75), the guide system (95) extending in the first direction (D1) and being configured for engaging with the wagons (811, 821, 831) and for guiding the wagons (811, 821, 831) along the first direction (D1).

6. The production line (5) of claim 4 or 5, wherein the conveyor system (70) comprises a transmission chain (92) and a motor (91), the wagons (811, 821, 831) being configured for engagement with the transmission chain (92), and the motor (91) being configured for transferring motion to the transmission chain (92).

7. The production line (5) of any previous claim comprising at least a second workstation (62, 63) configured for carrying out a post moulding manufacturing step on the assembled wind turbine blade (10) while the assembled wind turbine blade (10) passes along the second workstation (62).

8. The production line of claim 7, wherein the second workstation (62) is arranged side by side to the first workstation (61) such that it also extends along a direction substantially parallel to the first direction (D1) over a length that is less than the longitudinal length of the assembled wind turbine blade (10), the first workstation (61) and the second workstation (62) being arranged at a same side with respect to the assembled wind turbine blade (10), and further wherein the conveyor system (70) is configured for conveying the assembled wind turbine blade (10) in the first direction (D1) such that the assembled wind turbine blade (10) passes along the second workstation (62).

9. The production line (5) of claim 7, wherein the first workstation (61) and the second workstation (63) are arranged at a first side and at a second side with respect to the assembled wind turbine blade (10) such that the first and second workstations at least partially face each other.

10. The production line (5) of any previous claim, comprising a movable tip platform (96) configured for providing access to a blade tip portion (14) of the assembled wind turbine blade (10) and/or a movable root platform (97) configured for providing access to a blade root portion (16) of the assembled wind turbine blade (10).

11. A method (100) for carrying out a post moulding manufacturing step on an assembled wind turbine blade (10) comprising an upwind half shell (24) and a downwind half shell (26) joined at a leading edge (18) and at a trailing edge (20), the method comprising:
supporting the assembled wind turbine blade (10);
conveying the assembled wind turbine blade (10) in a first direction (D1) that is substantially aligned with a longitudinal axis of the assembled wind turbine blade (10) such that the assembled wind turbine blade (10) passes along a first workstation (61),
the first workstation (61) being configured for carrying out a post moulding manufacturing step on the assembled wind turbine blade (10) and extending over a length in a direction that is substantially parallel to the first direction (D1), the length of the first workstation (61) being less than a longitudinal length of the assembled wind turbine blade (10); and
conducting the post moulding manufacturing step on the assembled wind turbine blade (10) while the assembled wind turbine blade (10) passes along the first workstation (61).

12. The method (100) of claim 11, wherein supporting the assembled wind turbine blade (10) comprises supporting the assembled wind turbine blade (10) with the upwind half shell (24) facing downwards and straightening the assembled wind turbine blade (10).

13. The method of claim 12, wherein straightening the assembled wind turbine blade (10) comprises using blade supports (81, 82, 83) for supporting the assembled wind turbine blade (10), specifically using a blade support (81) for supporting a blade root area (17) of the assembled wind turbine blade (10) and two blade supports (82, 83) for supporting a tip root area (14) of the assembled wind turbine blade (10).

14. The method of any of claims 11 to 13, comprising:
conveying the assembled wind turbine blade (10) in a first direction (D1) such that the assembled wind turbine blade (10) passes along at least a second workstation (62) configured for carrying out a post moulding manufacturing step on the assembled wind turbine blade (10), the second workstation (62) also extending over a length in a direction that is substantially parallel to the first direction (D1), the length of the second workstation (62) being also less than a longitudinal length of the assembled wind turbine blade (10); and
conducting at least a second post moulding manufacturing step on the assembled wind turbine blade (10) while the assembled wind turbine blade (10) passes along the second workstation (62).

15. The method of any of claims 11 to 14, comprising:
after conducting the post moulding manufacturing step on the assembled wind turbine blade (10), transporting the assembled wind turbine blade (10) to a starting point of the production line (5) and conveying the assembled wind turbine blade (10) along the first direction (D1) such that the assembled wind turbine blade (10) passes along the first workstation (61) for a second time.
